# EUROPÄISCHE PATENTSCHRIFT

(11) **EP 1 526 598 B1**
(45) Veröffentlichungstag und Bekanntmachung des Hinweises auf die Patenterteilung: **09.09.2009**
(21) Anmeldenummer: 04025181.1
(22) Anmeldetag: 22.10.2004
(51) Int. Cl.: H01M 8/04

(54) **Verfahren zur indirekten Feuchtebestimmung von Gasen in einer Brennstoffzelle**
Method for indirectly determining the humidity of gases in a fuel cell
Méthode pour déterminer indirectement l'humidité des gaz dans une pile à combustible

(30) Priorität: 25.10.2003 DE 10349833
(43) Veröffentlichungstag der Anmeldung: 27.04.2005
(73) Patentinhaber: P 21-Power for the 21st Century GmbH, 85649 Brunnthal (DE)
(72) Erfinder: Schreiber, Jörg, 73447 Oberkochen (DE); Wolters, Ralf, 83137 Schonstett (DE); Goldner, Robert, 82194 Gröbenzell (DE)
(74) Vertreter: Müller, Thomas

(56) Entgegenhaltungen:
- EP-A- 0 629 013
- EP-A- 1 271 681
- WO-A-03/043115
- DE-A- 19 641 143
- US-A- 3 630 956
- PATENT ABSTRACTS OF JAPAN Bd. 1998, Nr. 14, 31. Dezember 1998 (1998-12-31) & JP 10 255828 A (HONDA MOTOR CO LTD), 25. September 1998 (1998-09-25)

## Beschreibung

Die vorliegende Erfindung betrifft ein Verfahren zur indirekten Feuchtebestimmung in einem Reaktionsbereich gemäß dem Oberbegriff von Patentanspruch 1.

Brennstoffzellensysteme sind bereits seit langem bekannt und haben in den letzten Jahren erheblich an Bedeutung gewonnen. Ähnlich wie Batteriesysteme erzeugen Brennstoffzellen elektrische Energie auf chemischem Weg durch eine Redoxreaktion von Wasserstoff und Sauerstoff, wobei die einzelnen Reaktanten kontinuierlich zugeführt und die Reaktionsprodukte kontinuierlich abgeführt werden.

Bei einer Brennstoffzelle werden die zwischen elektrisch neutralen Molekülen oder Atomen ablaufenden Oxidations- und Reduktionsprozesse in der Regel über einen Elektrolyten räumlich getrennt. Eine Brennstoffzelle besteht grundsätzlich aus einem Anodenteil, an den ein Brennstoff zugeführt wird. Weiterhin weist die Brennstoffzelle einen Kathodenteil auf, an dem ein Oxidationsmittel zugeführt wird. Räumlich getrennt sind der Anoden- und Kathodenteil durch den Elektrolyten. Bei einem derartigen Elektrolyten kann es sich beispielsweise um eine Membran handeln. Solche Membranen haben die Fähigkeit, Ionen durchzuleiten, Gase jedoch zurückzuhalten. Die bei der Oxidation abgegebenen Elektronen werden nicht lokal von Atom zu Atom übertragen, sondern als elektrischer Strom durch einen Verbraucher geleitet.

Als gasförmiger Reaktionspartner für die Brennstoffzelle können beispielsweise Wasserstoff als Brennstoff und Sauerstoff als Oxidationsmittel im Kathodenteil verwendet werden.

Will man die Brennstoffzelle mit einem leicht verfügbaren oder leichter zu speichernden Brennstoff, wie etwa Erdgas, Methanol, Propan, Benzin, Diesel oder anderen Kohlenwasserstoffen, anstelle von Wasserstoff betreiben, muss man den Kohlenwasserstoff in einer Vorrichtung zum Erzeugen/Aufbereiten eines Brennstoffs in einem so genannten Reformierungsprozess zunächst in ein wasserstoffreiches Gas umwandeln. Diese Vorrichtung zum Erzeugen/Aufbereiten eines Brennstoffs besteht beispielsweise aus einer Dosiereinheit mit Verdampfer, einem Reaktor für die Reformierung, beispielsweise für die Wasserdampfreformierung, einer Gasreinigung sowie häufig auch wenigstens einem katalytischen Brenner zur Bereitstellung der Prozesswärme für die endothermen Prozesse, beispielsweise den Reformierungsprozess.

Ein Brennstoffzellensystem besteht in der Regel aus mehreren Brennstoffzellen, die beispielsweise wiederum aus einzelnen Schichten gebildet sein können. Die Brennstoffzellen sind vorzugsweise hintereinander angeordnet, beispielsweise sandwichartig übereinander gestapelt. Ein derart ausgebildetes Brennstoffzellensystem wird dann als Brennstoffzellenstapel bzw. Brennstoffzellenstack bezeichnet.

Der Feuchtegehalt im Inneren einer Brennstoffzelle ist insbesondere bei einer PEM-Brennstoffzelle von entscheidender Bedeutung. Zu geringe Feuchten beeinträchtigen die Membran, während zu hohe Feuchten zu Kondensation führen, welche die Kanäle im Inneren verstopfen kann. Die Feuchte spielt insbesondere im Oxidationsmittelstrom eine große Rolle, so dass das erfindungsgemäße Verfahren und die erfindungsgemäße Vorrichtung insbesondere für diese Art von Gasstrom einsetzbar sind. Allerdings ist gerade die Messung hoher Luftfeuchten schwierig. Beispielsweise werden die meisten kapazitiven Sensoren unbrauchbar, wenn eine Kondensation eintritt oder zeigen lange Zeit fehlerhafte Werte an. Genauere Messverfahren sind häufig sehr teuer oder weisen einen hohen Platzbedarf auf.

Zum Stand der Technik ist in der JP 10 255828 A beispielsweise ein Brennstoffzellensystem beschrieben, bei dem die Last der Brennstoffzellen selbst gemessen wird, um eine Wasserbestimmungsgröße zu bestimmen. Aus der EP 0 629 013 A2 ist bekannt, ein Steuergerät zur Regelung eines gesamten Brennstoffzellensystems vorzusehen, wobei als Regelparameter dem Steuergerät unter anderem die Brennstoffzellenspannung und der Brennstoffzellenstrom bereitgestellt werden. Die EP 1 271 681 A2 offenbart einen Sensor zur Erfassung der Betriebsparameter Strom und Spannung einer Brennstoffzelle, um die Anfangsfeuchten der Gasströme zu bestimmen.

Es besteht ein Bedarf an einer einfacheren, fehlersicheren und auch bei beengten Raumverhältnissen montierbaren Vorrichtung zur Bestimmung des Feuchtegehalts in einem Gasstrom.

Diese Aufgabe wird durch die Bereitstellung eines Verfahrens zur indirekten Feuchtebestimmung eines Gasstroms in einem Reaktionsbereich mit den Merkmalen gemäß dem unabhängigen Patentanspruch 1 gelöst. Weitere vorteilhafte Ausgestaltungen, Aspekte und Details der vorliegenden Erfindung ergeben sich aus den abhängigen Patentansprüchen, der Beschreibung und den beigefügten Zeichnungen.

Die Erfindung basiert auf dem grundsätzlichen Merkmal, dass die Feuchte nicht mehr unmittelbar durch einen Feuchtesensor, sondern indirekt aus anderen Messgrößen berechnet wird beziehungsweise berechnet werden kann. Die Erfindung kann aber auch für andere Medien oder Gasströme sinnvoll sein, insbesondere wenn der Brennstoffzelle eine Reformierung vorgeschaltet ist. Die Feuchte kann beispielsweise durch die Beeinflussung der Menge des zugeführten Oxidationsmittelstroms geregelt werden. Hierfür wäre es wünschenswert, den Feuchtegehalt insbesondere des Oxidationsmittelstroms jederzeit genau zu kennen.

Die Erfindung ist auf ein Verfahren zur indirekten Feuchtebestimmung eines Gasstroms in einem Reaktionsbereich, in dem bei einer Reaktion Wasser freigesetzt wird, gerichtet, wobei durch eine Wasserbestimmungsvorrichtung eine Kenngröße für die absolute Menge des im Reaktionsbereich entstandenen Wassers bestimmt wird, durch eine Gasbestimmungsvorrichtung eine Kenngröße für den Gasdurchsatz durch den Reaktionsbereich bestimmt wird, und von einer Recheneinheit der Feuchtegehalt des Gasstroms zumindest aus den Kenngrößen für Wasser und Gasdurchsatz berechnet wird. Das Verfahren ist erfindungsgemäß **dadurch gekennzeichnet, dass** die Gaskenngröße eine Stromstärke und/oder eine Spannung einer zur Zufuhr des Gases zum Reaktionsbereich verwendeten Fördereinrichtung ist.

Vorzugsweise ist der Reaktionsbereich eine Brennstoffzelle, und die Wasserkenngröße ist die von der Brennstoffzelle erzeugte Stromstärke, wie oben ausgeführt.

Weiterhin kann vorzugsweise der Reaktionsbereich eine Brennstoffzelle sein und die Wasserkenngröße der Anteil des an der Kathodenseite entstehenden Produktwassers.

Die Gaskenngröße wiederum kann die Menge des in den Reaktionsbereich einströmenden Gases sein. Dementsprechend kann, wie oben ausgeführt, die Gaskenngröße eine Stromstärke und/oder eine Spannung einer zur Zufuhr des Gases zum Reaktionsbereich verwendeten Fördereinrichtung sein. Das Verfahren kann weiterhin, insbesondere zur Berechnung einer relativen Luftfeuchte, durch einen Feuchtemesser den Anfangsfeuchtegehalt des in den Reaktionsbereich einströmenden Gases bestimmen, wobei von der Recheneinheit der Anfangsfeuchtegehalt zur Berechnung des Feuchtegehalts des Gasstromes berücksichtigt wird.

Weiterhin kann, insbesondere zur Bestimmung der relativen Feuchte des Gasstroms, durch einen Temperatursensor weiterhin die Temperatur des Gasstroms vor, im oder hinter dem Reaktionsbereich bestimmt werden und von der Recheneinheit zur Berechnung des Feuchtegehalts des Gasstroms berücksichtigt werden.

Zur Berechnung des Feuchtegehalts gemäß dem erfindungsgemäßen Verfahren kann die Dampfdruckkurve von Wasser verwendet werden. Auf diese Weise ist es möglich, die relative Luftfeuchte im Gasstrom in einfacher Weise zu bestimmen. Weitere Vereinfachungen und damit Verbesserungen des erfindungsgemäßen Verfahrens können dadurch erzielt werden, dass zur Berechnung entweder eine Polynomnäherung der Dampfkurve oder eine Polynomnäherung des Logarithmus der Dampfkurve eingesetzt wird, oder dass zur Berechnung die Umkehrfunktion der Dampfkurve oder eine Polynomnäherung der Umkehrfunktion der Dampfkurve von Wasser verwendet wird. Die Verwendung von Polynomannäherungen reduziert die Zahl der abzuspeichernden Werte, die in der Berechnung verwendet werden, während der Logarithmus (bei sinkender Genauigkeit) eine erheblich kleinere Wertespanne und damit eine einfachere Berechnung mit sich bringt.

Falls zur Berechnung eine Polynomnäherung der Umkehrfunktion der Dampfkurve von Wasser verwendet wird, kann zusätzlich zur Berechnung die Temperatur als Funktion des Logarithmus des Sättigungsdampfdrucks verwendet werden.

Weiterhin kann erfindungsgemäß und vorteilhafterweise für bestimmte Mess- und Betriebskonfigurationen das Betriebsverhalten bei verschiedenen, berechneten Feuchtegehalten ermittelt werden und daraus der für die Regelung zu verwendende Zielwert für die Feuchte ermittelt werden. Auf diese Weise kann eine Betriebsbedingung im Reaktionsbereich, die möglicherweise nicht über die Zeit konstant ist, zur Anpassung eines Zielwerts der Feuchte berücksichtigt werden.

Das erfindungsgemäße Verfahren kann weiterhin zusätzlich eine Regelung des Feuchtegehalts umfassen, wobei eine Abweichung des berechneten Feuchtewerts bei einem vorgegebenen Sollfeuchtewert berechnet wird und aufgrund der Abweichung eine Vorrichtung zum Korrigieren der Feuchte gesteuert wird. So kann beispielsweise in einer bevorzugten Ausführungsform die Menge des geförderten Gases gesteuert werden, wobei die Steuerung durch Regeln einer Fördervorrichtung und/oder eines Ventils im Gasstrom gesteuert werden kann.

Das erfindungsgemäße Verfahren kann weiterhin dadurch gekennzeichnet sein, dass die Menge einer dem Gas zugesetzten Feuchtigkeit gesteuert wird, beispielsweise durch einen Luftbefeuchter.

Weiterhin wird eine Vorrichtung beschrieben zur direkten Feuchtebestimmung eines Gasstroms in einem Reaktionsbereich, in dem bei einer Reaktion Wasser freigesetzt wird, die eine Wasserbestimmungsvorrichtung zur Bestimmung einer Wasserkenngröße für die absolute Menge des im Reaktionsbereich entstandenen Wassers, eine Gasbestimmungsvorrichtung zur Bestimmung einer Gaskenngröße für die Gasmenge im oder durch den Reaktionsbereich, und eine Recheneinheit zur Berechnung des Feuchtegehalts des Gasstroms zumindest aus den Kenngrößen für Wasser- und Gasdurchsatz aufweist.

Unter einer Recheneinheit ist im Sinne der vorliegenden Erfindung jegliche Vorrichtung zu verstehen, die in der Lage ist, aus den eingehenden Messwerten für die Kenngrößen mit Hilfe eines Algorithmus einen Feuchtewert zu bestimmen. Dies kann eine diskrete elektronische Schaltung sein, die speziell für diesen Zweck gebaut worden ist, ein programmierter Analog-Rechner oder ein Digitalrechner wie ein Mikrocontroller oder ein PC und dergleichen.

Ein Reaktionsbereich ist ein gegenüber der Umwelt so weitgehend abgeschlossener Bereich, dass in ihm ein eigenes Mikroklima bezüglich Luftfeuchte und gegebenenfalls Temperatur herrscht und in dem eine Reaktion abläuft, bei der sich der Wassergehalt in einem gasförmigen Medium, das sich im Reaktionsbereich aufhält, ändert. Vorzugsweise ist der Reaktionsbereich ein solcher, in dem Energie, beispielsweise in Form thermischer oder elektrischer Energie, gewonnen wird.

Es stehen verschiedene mögliche physikalische Größen zur Bestimmung der Kenngrößen zur Verfügung. Beispielsweise ist die Menge des beim Betrieb einer Brennstoffzelle entstehenden Wassers proportional zum elektrischen Strom. Dementsprechend wird bevorzugt, dass, falls der Reaktionsbereich eine Brennstoffzelle ist, die Wasserkenngröße die von der Brennstoffzelle erzeugte Stromstärke ist.

Damit ist die Wasserbestimmungsvorrichtung vorzugsweise ein Amperemeter.

Bei einer weiteren Ausführungsform der Erfindung ist der Reaktionsbereich ebenfalls eine Brennstoffzelle und die Wasserkenngröße ist der Anteil des an der Kathodenseite entstehenden Produktwassers, das zusätzlich oder alternativ zur Stromstärke gemessen werden kann.

Die Gasmenge im Sinne der vorliegenden Erfindung kann beispielsweise der Gasdurchsatz (Gasvolumen pro Zeiteinheit), das Gasvolumen selbst oder eine Gasmasse sein. Die zur Bestimmung dieser Gase herangezogene Gaskenngröße ist vorzugsweise die Menge des in den Reaktionsbereich einströmenden Gases, welche beispielsweise durch einen Strömungsmesser einfach gemessen werden kann.

Alternativ oder zusätzlich kann als Gaskenngröße auch eine Stromstärke und/oder eine Spannung einer zur Zufuhr des Gases zum Reaktionsbereich verwendeten Fördereinrichtung sein, sofern eine solche Fördereinrichtung vorhanden ist. Die Gaskenngröße kann dann nach Eichung der Förderleistung der Fördereinrichtung in Bezug auf die dafür notwendige Stromstärke beziehungsweise Spannung für beliebige Stromstärken oder Spannungen vorab ermittelt und in die Berechnung des Feuchtegehaltes einbezogen werden. Auf diese Weise ist eine noch indirektere Abnehmung der Gaskenngröße als mit einem in den Gasstrom hinein ragenden Strömungsmesser möglich.

Oft kann eine Feuchte des dem Reaktionsbereich zufließenden Gasstroms im Vergleich zu in dem Reaktionsbereich entstehendem Wasser vernachlässigt werden. Es kann jedoch bei bestimmten Verfahren wünschenswert sein, auch die Anfangsfeuchte zu berücksichtigen, beispielsweise um eine exaktere Feuchtebestimmung vornehmen zu können oder um hohen Luft- oder Gasfeuchten bereits bei dem Zuflussgas zum Reaktionsbereich Rechnung zu tragen. Daher kann die Vorrichtung weiterhin einen Feuchtemesser zur Bestimmung des Anfangsfeuchtegehalts des in den Reaktionsbereich einströmenden Gases aufweisen, und die Recheneinheit zur Berechnung des Feuchtegehalts des Gasstroms kann den Anfangsfeuchtegehalt berücksichtigen.

Mit den bislang bereitgestellten Kenngrößen lässt sich der absolute Feuchtegehalt eines Gasstroms bestimmen. Um eine Kondensation von Wasser im Gasstrom zu vermeiden, ist es jedoch zumeist interessant, die relative Feuchte eines Gasstroms zu bestimmen, da bei Überschreiten der Sättigungsgrenze (100 % relative Feuchte) Kondensation einsetzt. Bei Reaktionsbereichen und Zufuhrgas, bei denen die Temperatur als konstant anzunehmen ist, ist eine Bestimmung der relativen Feuchte nicht notwendig.

Zur Bestimmung der relativen Feuchte wird es bevorzugt, dass die Vorrichtung weiterhin wenigstens einen Temperatursensor zur Bestimmung der Temperatur des Gasstroms vor und/oder im und/oder hinter dem Reaktionsbereich aufweist und die Recheneinheit zur Berechnung des Feuchtegehalts des Gasstroms die Temperatur berücksichtigt. Damit stehen auch Möglichkeiten zur Berechnung der relativen Feuchte zur Verfügung. Eine solche Temperaturmessung kann im Falle einer Brennstoffzelle beispielsweise am einströmenden Luftstrom (zum Beispiel vor dem Gebläse, Kompressor und dergleichen), im zuführenden Anodengasstrom, hinter der Brennstoffzelle im Kathodenstrom, im Anodenabgasstrom und/oder in der Brennstoffzelle oder im Stack der Brennstoffzelle, oder dergleichen erfolgen. Grundsätzlich reicht es aus, wenn ein solcher Temperatursensor zum Einsatz kommt. Es sind aber auch beliebige Kombinationen von Temperatursensoren an den vorgenannten Stellen möglich. Durch Kombination mehrerer Sensoren kann vorteilhaft mittels Dampfdruckkurven und theoretischer Betrachtung die optimale Feuchte für den Stack einer Brennstoffzelle im Betrieb, beim Starten und beim Herunterfahren (Nachlauf) erreicht werden.

Weiterhin wird eine Regelschaltung beschrieben, welche eine Vorrichtung zur Feuchtebestimmung, einen Soll/Ist-Komparator zum Vergleich der ermittelten Feuchte mit einem Sollwert der Feuchte, und eine Vorrichtung zum Korrigieren der Feuchte umfasst. Alles bezüglich der Vorrichtung zur indirekten Feuchtebestimmung Gesagte gilt sinngemäß auch für die Regelvorrichtung und umgekehrt, so dass wechselseitig Bezug genommen wird.

Vorzugsweise ist die Vorrichtung zum Korrigieren der Feuchte eine Regelung einer Fördervorrichtung für das Gas. Eine solche Regelung kann beispielsweise eine Steuerung der Umdrehungsgeschwindigkeit eines das Gas fördernden Gebläses oder eines Kompressors sein oder ein den Gasdurchlass steuerndes Ventil, oder eine Steuerung einer Kompressor-Expandereinheit.

Des Weiteren kann vorzugsweise die Vorrichtung zum Korrigieren der Feuchte eine Regelung einer Befeuchtungsvorrichtung für das Gas sein. Dies ist besonders dann sinnvoll, wenn eine bestimmte Minimalfeuchte gewährleistet sein muss und nicht sicher ist, dass diese stets durch die Kombination der im Gasstrom vorhandenen und im Reaktionsbereich erzeugten Feuchte eingestellt werden kann.

Im Folgenden soll die vorliegende Erfindung näher erläutert werden, wobei auf die beigefügte Zeichnung Bezug genommen wird, in denen Folgendes dargestellt ist:
- Fig. 1: zeigt in schematischer Darstellung eine erfindungsgemäße Vorrichtung zur indirekten Berechnung des Feuchtgehalts; und
- Fig. 2: zeigt eine Regelungsschaltung gemäß der Erfindung.

Wie ausgeführt, basiert die Erfindung auf dem grundsätzlichen Konzept, dass die Feuchte indirekt aus anderen Messgrößen berechnet wird, um Feuchtesensoren im Reaktionsbereich zu vermeiden.

Beispielsweise ist die Menge des beim Betrieb einer Brennstoffzelle entstehenden Wassers proportional zum elektrischen Strom. Die in der Abluft enthaltene Wassermenge kann dann beispielsweise aus folgenden Größen berechnet werden:
a) Relative Feuchte und Temperatur einer Zuluft;
b) elektrische Stromstärke, die von einer Brennstoffzelle erzeugt wird;
c) Anteil des Produktwassers, das an der Kathodenseite entsteht.

Zur Berechnung der relativen Feuchte des Gasstroms am Ausgang der Brennstoffzelle braucht man dann noch zusätzlich folgende Größen:
d) Temperatur in der Brennstoffzelle/am Gasaustritt
e) Massen-/Stoffmengenstrom des Oxidationsmittels

In der meist relativ trockenen Zuluft kann die Feuchte durch Messung der relativen Feuchte und Temperatur berechnet werden. Oft ist dies im Vergleich zum in der Brennstoffzelle entstehenden Wasser jedoch vernachlässigbar.

Ein mögliches Verfahren zur Messung des Gasstroms, beispielsweise eines Oxidationsmittelstroms, dessen direkte Bestimmung mitunter kompliziert sein kann, besteht darin, für verschiedene elektrische Leistungen einer Fördereinrichtung, mit der der Gasstrom dem Reaktionsbereich, beispielsweise einer Brennstoffzelle, zugeführt wird, mittels eines geeichten Strömungsmessers die transportierte Luftmenge zu messen. So kann eine Kennlinie bestimmt werden, aus der dann später mittels Interpolation für jede Lüfterleistung die Fördermenge berechnet werden kann, ohne dass jedes Mal ein Strömungsmesser verwendet werden muss. Dabei ist es in einer gegebenen Vorrichtung sinnvoll, von Zeit zu Zeit diese Kennlinie zu überprüfen. Auch eine Bestimmung der Temperaturabhängigkeit der Kennlinie und eine Berücksichtigung der Abweichungen bei unterschiedlichen Temperaturen kann die Qualität der Ergebnisse verbessern.

Idealerweise bestimmt eine Regeleinrichtung beim Betrieb der Brennstoffzelle in Echtzeit ständig die Feuchte in und/oder am Ausgang der Brennstoffzelle.

Wie hoch der "ideale" Feuchtigkeitsgehalt in einem Reaktionsbereich wie einer Brennstoffzelle ist, kann beispielsweise vor dem Einsatz der Brennstoffzelle im Labor bestimmt werden. Selbst wenn der nach dem beschriebenen Verfahren berechnete Feuchtigkeitswert nicht exakt dem realen Wert entspricht, kann eine sinnvolle Regelung der Brennstoffzelle dennoch möglich sein. Die Regelung setzt die Leistung der Fördereinrichtung beim Betrieb so fest, dass der im Labor als "ideal" bestimmte Feuchtigkeitsgehalt erreicht wird. Ob dieser der tatsächlichen Feuchte entspricht, ist weniger entscheidend, wichtiger ist vielmehr, dass die Randbedingungen im Labor und Betrieb möglichst ähnlich sind.

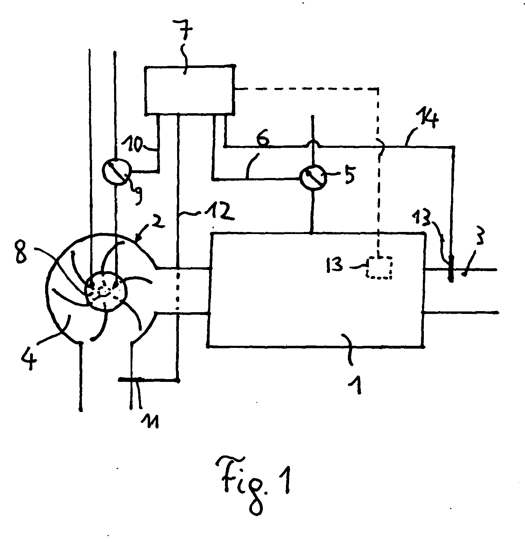

Figur 1 zeigt in schematischer Darstellung eine Vorrichtung zur Bestimmung des Feuchtegehalts gemäß einer ersten Ausführungsform der Erfindung. Ein (hier als "Black Box" gezeigter) Reaktionsbereich 1 hat eine Gaszufuhr 2 und eine Gasabfuhr 3. Die Gaszufuhr 2 umfasst ein Gebläse oder einen Kompressor oder eine Kompressor-Expandereinheit 4, um einen Gasstrom dem Reaktionsbereich 1, beispielsweise einer Brennstoffzelle zuzuführen. Durch eine im Reaktionsbereich 1 stattfindende Reaktion wird gasförmiges Wasser freigesetzt. Im vorliegenden Fall wird eine erzeugte Strommenge im Reaktionsbereich mit Hilfe eines Amperemeters 5, welches über eine Leitung 6 mit einer Recheneinheit 7 verbunden ist, bestimmt. Die Förderleistung des Gasstroms wird mittels des Stroms an einem Gebläsemotor 8 durch ein Amperemeter 9 bestimmt, das mit einer Leitung 10 mit der Recheneinheit 7 verbunden ist. Mit dieser Anordnung lässt sich eine Absolutfeuchte im Gasstrom innerhalb des Reaktionsbereichs bereits in erster Näherung bestimmen.

Zur Verbesserung der Genauigkeit kann weiterhin ein Feuchtesensor 11, der in einem unkritischen (keinen hohen Stress ausgesetzten) Bereich der Zufuhr 2 angeordnet ist und mit einer Leitung 12 mit der Recheneinheit 7 verbunden ist, verwendet werden, während die Temperatur (zur Bestimmung der relativen Feuchte) mittels eines Temperatursensors 13, der über eine Leitung 14 mit der Recheneinheit 7 verbunden ist, bestimmt wird.

Je nach Ausgestaltung kann/können ein oder mehrere Temperatursensoren 13 vorgesehen sein, der/die an unterschiedlichen Stellen platziert ist/sind. Beispielsweise kann, wie in den Figuren dargestellt, ein Temperatursensor 13 in der Gasabfuhr 3 vorgesehen sein. Alternativ oder zusätzlich können Temperatursensoren auch an anderen Stellen vorgesehen sein. So kein wenigstens ein Temperatursensor 13 beispielsweise auch im Reaktionsbereich 1, beispielsweise einer Brennstoffzelle oder einem Brennstoffzellenstack, vorgesehen sein. Dies ist in den Figuren gestrichelt dargestellt. Ebenso ist es möglich, im Falle einer Brennstoffzelle, einen Temperatursensor im Anodengasstrom der Brennstoffzelle (nicht dargestellt) vorzusehen, insbesondere in der Anodengaszufuhr und/oder der Anodengasabfuhr.

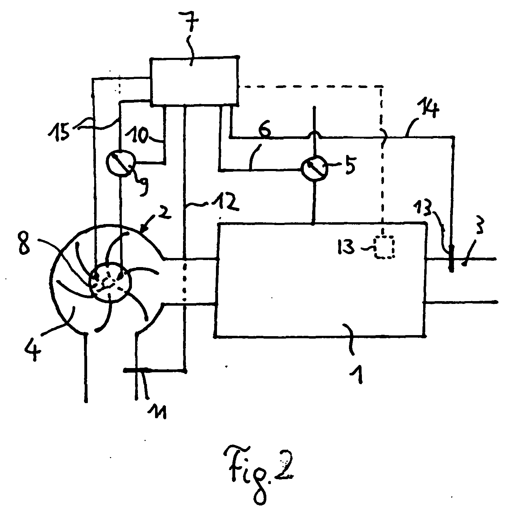

In Figur 2 ist als Ergänzung zur Figur 1 weiterhin eine Steuerung des Luftstroms zur Regulierung des Gases vorgesehen. Hierbei ist die Stromversorgung 15 des Motors 8 direkt an der Recheneinheit 7 angeschlossen, und abhängig von der Abweichung zwischen Soll- und Istgröße wird der Motor 8 mit mehr oder weniger Energie über die Leitung 15 versorgt, um mehr oder weniger Gas dem Reaktionsbereich zuzuführen.

## Patentansprüche

1. Verfahren zur indirekten Feuchtebestimmung eines Gasstroms in einem Reaktionsbereich (1), in dem bei einer Reaktion Wasser freigesetzt wird, wobei durch eine Wasserbestimmungsvorrichtung (5) eine Kenngröße für die absolute Menge des im Reaktionsbereich entstandenen Wassers bestimmt wird, durch eine Gasbestimmungsvorrichtung (9) eine Kenngröße für den Gasdurchsatz durch den Reaktionsbereich bestimmt wird, und von einer Recheneinheit (7) der Feuchtegehalt des Gasstroms zumindest aus den Kenngrößen für Wasser- und Gasdurchsatz berechnet wird, **dadurch gekennzeichnet, dass** die Gaskenngröße eine Stromstärke und/oder eine Spannung einer zur Zufuhr des Gases zum Reaktionsbereich verwendeten Fördereinrichtung (4) ist.

2. Verfahren nach Anspruch 2, **dadurch gekennzeichnet, dass** der Reaktionsbereich (1) eine Brennstoffzelle ist und die Wasserkenngröße die von der Brennstoffzelle erzeugte Stromstärke und/oder der Anteil des an der Kathodenseite entstehenden Produktwassers ist.

3. Verfahren nach einem der Ansprüche 1 oder 2, **dadurch gekennzeichnet, dass** weiterhin durch einen Temperatursensor (11) die Temperatur des Gasstroms vor, im oder hinter dem Reaktionsbereich (1) bestimmt wird und von der Recheneinheit (7) zur Berechnung des Feuchtegehalts des Gasstroms berücksichtigt wird.

4. Verfahren nach einem der Ansprüche 1 bis 3, **dadurch gekennzeichnet, dass** für bestimmte Mess- und Betriebskonfigurationen das Betriebsverhalten bei verschiedenen, berechneten Feuchtegehalten ermittelt wird und daraus der für die Regelung zu verwendende Zielwert für die Feuchte ermittelt wird.

5. Verfahren nach einem der Ansprüche 1 bis 4, **dadurch gekennzeichnet, dass** es weiterhin eine Regelung des Feuchtegehalts umfasst, wobei eine Abweichung des berechneten Feuchtewerts von einem vorgegebenen Sollfeuchtewert berechnet wird und aufgrund der Abweichung eine Vorrichtung (8) zum Korrigieren der Feuchte gesteuert wird.

## Claims

1. Method for indirectly determining the humidity of a gas current in a reaction zone (1) in which water is liberated during a reaction, wherein by means of a water detecting apparatus (5) a characteristic value for the absolute quantity of water formed in the reaction zone is determined, by means of a gas detecting apparatus (9) a characteristic value for the throughput of gas through the reaction zone is determined, and a computing unit (7) calculates the humidity level of the gas current at least from the characteristic values for the throughput of water and gas, **characterised in that** the characteristic value for gas is a current intensity and/or a voltage of a conveying device (4) used to supply the gas to the reaction zone.

2. Method according to claim 1, **characterised in that** the reaction zone (1) is a fuel cell and the characteristic value for water is the current intensity generated by the fuel cell and/or the proportion of product water formed on the cathode side.

3. Method according to one of claims 1 or 2, **characterised in that** furthermore the temperature of the gas current in front of, in or behind the reaction zone (1) is determined by a temperature sensor (11) and is taken into consideration by the computing unit (7) for calculating the humidity level of the gas current.

4. Method according to one of claims 1 to 3, **characterised in that** for certain measuring and operating configurations, the operating behaviour at different calculated humidity levels is ascertained and from this the target value for the humidity that is to be used for regulation is determined.

5. Method according to one of claims 1 to 4, **characterised in that** it further encompasses regulating the humidity level, wherein a deviation in the calculated humidity level from a given desired humidity level is calculated and an apparatus (8) for correcting the humidity is controlled on the basis of the deviation.

## Revendications

1. Méthode pour déterminer indirectement l'humidité d'un flux de gaz dans une zone de réaction (1), dans laquelle de l'eau est dégagée lors d'une réaction, une caractéristique pour la quantité absolue de l'eau générée dans la zone de réaction étant déterminée par un dispositif de détermination de l'eau (5), une caractéristique pour le débit de gaz à travers la zone de réaction étant déterminée par un dispositif de détermination de gaz (9), et la teneur en humidité du flux de gaz étant calculée au moins à partir des caractéristiques pour le débit d'eau et de gaz par une unité de calcul (7), **caractérisée en ce que** la caractéristique du gaz est une intensité de courant et/ou une tension d'un dispositif de transport (4) utilisé pour amener le gaz à la zone de réaction.

2. Méthode selon la revendication 1, **caractérisée en ce que** la zone de réaction (1) est une pile à combustible et la caractéristique de l'eau est l'intensité du courant générée par la pile à combustible et/ou la part de l'eau du produit générée du côté de la cathode.

3. Méthode selon l'une quelconque des revendications 1 ou 2, **caractérisée en ce que** la température du flux de gaz est également déterminée devant, dans ou derrière la zone de réaction (1) par un détecteur de température (11), et prise en compte par l'unité de calcul (7) pour le calcul de la teneur en humidité du flux de gaz.

4. Méthode selon l'une quelconque des revendications 1 à 3, **caractérisée en ce que** le comportement en service pour différentes teneurs en humidité calculées est déterminé pour des configurations de mesure et de fonctionnement données et **en ce que** la valeur cible de l'humidité à utiliser pour la régulation est déterminée à partir de ces données.

5. Méthode selon l'une quelconque des revendications 1 à 4, **caractérisée en ce qu'**elle comprend en outre une régulation de la teneur en humidité, un écart de la valeur d'humidité calculée par rapport à une valeur d'humidité de consigne prédéfinie étant calculée et en raison de l'écart, un dispositif (8) de correction de l'humidité étant commandé.
